(19) Europäisches Patentamt
European Patent Office
Office européen des brevets

(11) **EP 4 534 434 A1**

(12) **EUROPEAN PATENT APPLICATION**
published in accordance with Art. 153(4) EPC

(43) Date of publication:
09.04.2025 Bulletin 2025/15

(21) Application number: 23811883.0

(22) Date of filing: 25.05.2023

(51) International Patent Classification (IPC):
**B65D 41/04** (2006.01)

(52) Cooperative Patent Classification (CPC):
**B65D 41/04**

(86) International application number:
**PCT/JP2023/019513**

(87) International publication number:
**WO 2023/229011 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.05.2022 JP 2022086259

(71) Applicant: **Shinko Chemical Co., Ltd.**
**Kanazawa-shi**
**Ishikawa 920-0346 (JP)**

(72) Inventors:
• **JOBOJI, Takahiro**
  **Kanazawa-shi, Ishikawa 920-0346 (JP)**
• **DOI, Atsushi**
  **Kanazawa-shi, Ishikawa 920-0346 (JP)**

(74) Representative: **HGF**
**HGF Limited**
**1 City Walk**
**Leeds LS11 9DX (GB)**

(54) **CAP**

(57) In a cap including a top plate that is circular in shape; and a side wall becoming larger in a tapered shape from an outer perimeter of the top plate toward a lower end having a ring-like shape, on an outer surface of the side wall, a plurality of knurls extending in a direction from the outer perimeter toward the lower end are arranged side by side, and on an inner surface of the side wall, grooves formed inside the respective knurls and an inner thread having a screw shape are provided, and the inner thread is split by the grooves. Each of the knurls has a ridgeline substantially in parallel with a vertical direction with respect to the top plate, and bottom surfaces of the respective grooves are provided in parallel with the ridgeline. Lower ends of the respective knurls are spaced apart from the lower end of the side wall.

Fig.1

## Description

TECHNICAL FIELD

The present invention relates to a cap for a container, and particularly, to a cap for a chemical container suitable for bump-off removal.

BACKGROUND ART

In a container including a cap and a receptacle, the cap has a top plate and a side wall extending from the outer perimeter of the top plate, in a direction perpendicular to the top plate. On the inner side of the side wall, an inner thread is provided as a straight thread. Similarly, an outer thread that is also a straight thread is provided around the opening of the receptacle. By meshing the inner thread of the cap with the outer thread of the receptacle, the cap is tightened onto the receptacle, so as to seal the internal of the container. A cap having an inner thread as such a straight thread is formed by injecting heated molten plastic into a mold, and cooling and solidifying the plastic. The solidified cap is then removed from the threaded mold by rotating the cap. The requirements for such a process of rotating the cap and a rotation mechanism, such as a motor, complicate the manufacturing process and the manufacturing apparatus (see, for example, Patent Document 1).

PRIOR ART DOCUMENT

PATENT DOCUMENT

Patent Document 1: JP-A-2004-352261

SUMMARY OF THE INVENTION

PROBLEMS TO BE SOLVED BY THE INVENTION

To address this issue, by using a cap having a side wall that becomes larger in a tapered shape from the outer perimeter of the top plate toward the lower end having a ring-like shape, and having a tapered thread inside, what is called bump-off, which is a removal of an injection-molded cap from the threaded mold by pushing without rotating, becomes usable. However, there have been some problems that not only it is necessary to change the design of the tapered thread, e.g., use a larger flank angle or a lower thread height, to make bump-off possible, but also the container does not have sufficient sealability because the cap is more likely to experience thread stripping, which is skipping of some threads as the cap is fastened to the receptacle.

To address these issues, an object of the present invention is to provide a highly sealable cap for a container that can be bumped-off without requiring any changes in the tapered thread, such as a flank angle, that does not cause thread stripping, and that has a high sealability.

SOLUTIONS TO THE PROBLEMS

One aspect of the present invention is a cap including: a top plate that is circular in shape; and a side wall becoming larger in a tapered shape from an outer perimeter of the top plate toward a lower end having a ring-like shape, in which

on an outer surface of the side wall, a plurality of knurls extending in a direction from the outer perimeter toward the lower end are arranged side by side, and

on an inner surface of the side wall, grooves formed inside the respective knurls and an inner thread having a screw shape are provided, and the inner thread is split by the grooves.

EFFECTS OF THE INVENTION

By providing the grooves inside the respective knurls of the cap having the tapered thread, it becomes possible to provide a cap for a container that can be bumped off easily, that does not cause thread stripping, and that has a high sealability.

BRIEF DESCRIPTION OF THE DRAWINGS

[Fig. 1] Fig. 1 is an exploded perspective view of a container according to an embodiment of the present invention.
[Fig. 2] Fig. 2 is a plan view of a cap according to the embodiment of the present invention.
[Fig. 3] Fig. 3 is a cross-sectional view of the cap across the line A-A in Fig. 2.
[Fig. 4] Fig. 4 is a cross-sectional view of the cap across the line B-B in Fig. 2.
[Fig. 5] Fig. 5 is a cross-sectional view showing an injection-molding process of the cap.

DETAILED DESCRIPTION

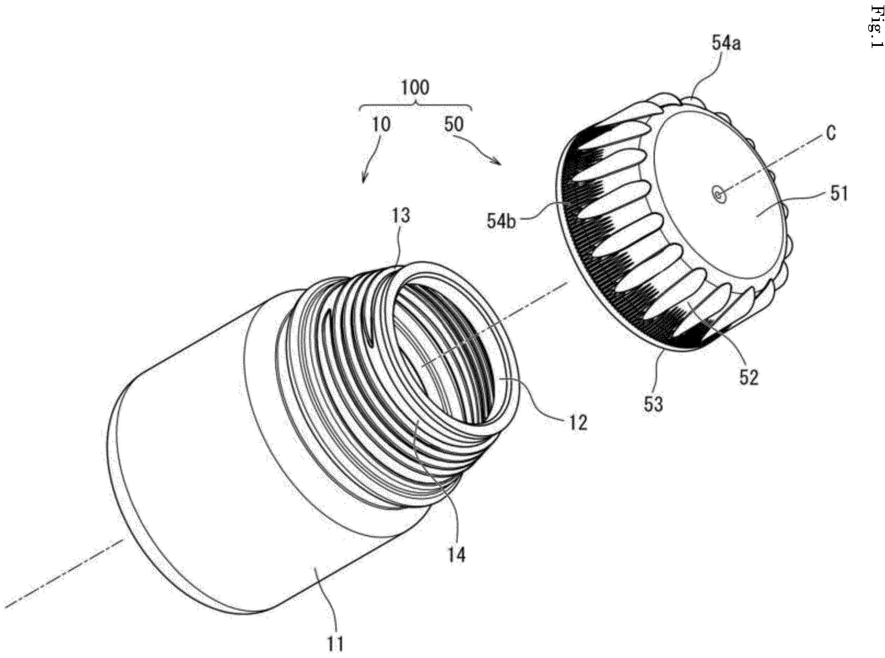

Fig. 1 is an exploded perspective view of a container according to an embodiment of the present invention, the entirety of which is designated with a reference sign 100. The container 100 includes a receptacle 10 for storing a chemical or the like, and a cap 50 meshing with the receptacle and sealing the receptacle. C denotes a central axis.
The receptacle 10 has a bottom surface, a body 11 having a cylindrical side surface extending substantially perpendicularly from the bottom surface, and a tapered portion 14 having a diameter gradually becoming smaller from the upper end of the body 11 toward the opening 12. The tapered portion 14 is provided with an outer thread 13 as a tapered double thread having a thread count of four as an engagement length.

The material of the receptacle 10 is, for example, polyethylene (PE), polypropylene (PP), or polyethylene terephthalate (PET).

The cap 50 has a flat disk-shaped top plate 51 and a side wall 52 becoming larger in a tapered shape from the outer perimeter of the top plate 51 toward a lower end 53 having a ring-like shape. A plurality of knurls 54a are arranged side by side on the outer surface of the side wall 52, in a direction from the outer perimeter of the top plate 51 toward the lower end 53. These knurls 54a prevent slippage when a user turns the cap 50. The cap 50 is provided with two to twenty-four knurls, preferably eighteen to twenty-four knurls, for example. As shown in Fig. 1, smaller knurls 54b may be provided, in addition to the larger knurls 54a.

The material of the cap 50 is, for example, polypropylene (PP), or polyethylene (PE), particularly, high density polyethylene (HDPE). Alternatively, it is also possible to use low density polyethylene (LDPE), linear low density polyethylene (LLDPE), polymethylpentene (PMP), or polyethylene terephthalate (PET), polybutylene terephthalate (PBT), for example.

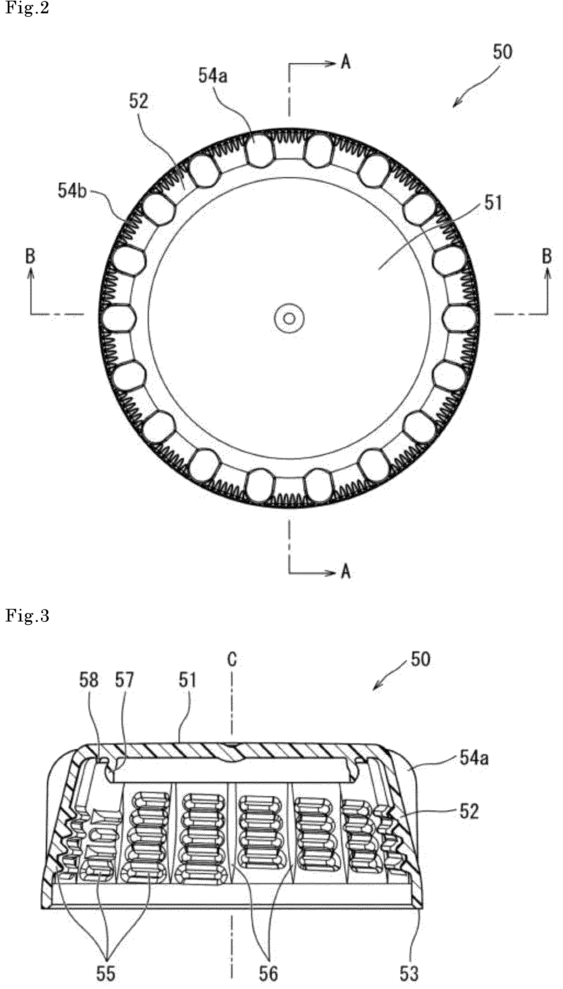

Fig. 2 is a plan view of the cap 50 shown in Fig. 1, as viewed from above in the direction of the central axis C. On the side wall 52 around the top plate 51, eighteen knurls 54a are provided in total, at equal intervals, and the smaller knurls 54b are further provided.

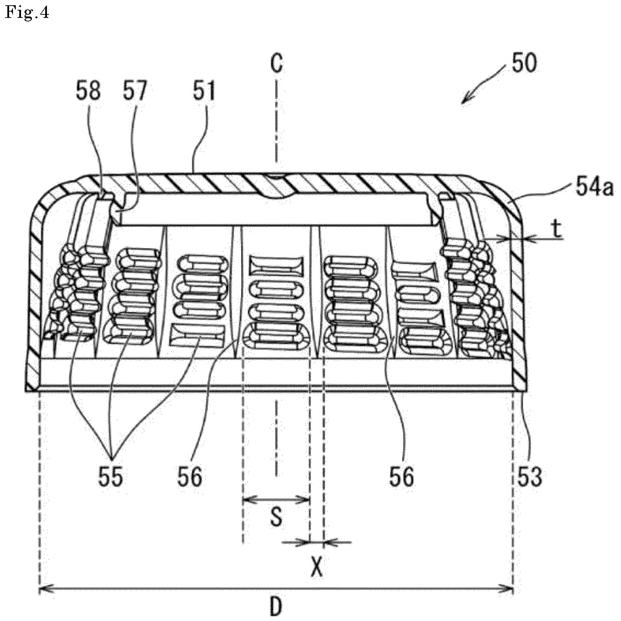

Fig. 3 is a cross-sectional view (not including the cross section of the knurls 54a) as viewed in the direction A-A in Fig. 2, and Fig. 4 is a cross-sectional view (including the cross section of the knurls 54a) as viewed in the direction B-B in Fig. 2. In Figs. 3 and 4, the same or corresponding parts are denoted by the same reference signs as those used in Figs. 1 and 2.

As shown in Fig. 3, the cap 50 includes the top plate 51 that is flat, and the side wall 52 becoming larger in a tapered shape from the outer perimeter of the top plate 51 toward the lower end 53 having a ring-like shape. The side wall 52 is inclined by an inclination angle of 14° with respect to the central axis C. By changing this inclination angle, the number of rotations required in removing the cap 50 from the receptacle 10 can be adjusted.

A seal ring 57 and a contact ring 58 each having a ring-like shape are provided on the rear surface of the top plate 51. The seal ring 57 comes into contact with the top end of the receptacle 10, to provide sealing, while the receptacle 10 is closed with the cap 50. It is also possible to provide a flat packing on the rear surface of the top plate 51, instead of the seal ring 57.

With the contact ring 58, it becomes possible to adjust the length of engagement (the length by which the inner thread and the outer thread come into contact when the receptacle is closed), by adjusting the height of the contact ring 58.

On the inner surface of the side wall 52, grooves (cutouts) 56 formed inside the respective knurls 54a and an inner thread 55 having a screw shape are provided. In this example, the inner thread 55 is a double thread with a thread count of four.

Note that the inner thread 55 and the outer thread 13 are preferably double threads, triple threads, or quadruple threads. Fine threads are preferably used. Furthermore, by using the tapered thread, it is possible to reduce the number of times the cap is rotated to open the cap 50, compared with that required with a straight thread, so that it is possible to make the receptacle easily openable.

As shown in Fig. 3, the knurls 54a each having a ridgeline substantially in parallel with the central axis C are provided outside the side wall 52. The direction substantially in parallel with the central axis C is a direction substantially perpendicular to the top plate 51, and configurations in which the ridgelines are inclined by about 0.5° to 3°, for example, with respect to the central axis C, are also included.

It is preferable for the lower ends of the respective knurls 54a to be provided in a manner spaced apart from the lower end 53 of the side wall 52. This is to increase a restoring force of the knurls 54a, because, with such a configuration, the lower end 53 does not deform at the time of bump-off.

There is a hollow groove 56 inside each of the knurls 54a. The bottom of the groove 56 extends in parallel with the ridgeline. The inner thread 55 having a screw shape is split by these grooves 56. Each end of the split thread is preferably rounded at a roundness R.

The number N of the knurls 54a can be calculated from following Equation 1:

$$N = \pi D / (X + 2t + S + P) \cdots \text{(Equation 1)}$$

t: the cap thickness,
X: the groove width,
S: the length of the inner thread between each pair of the grooves,
D: the inner diameter of the lower end of the cap, and
P: the dimensional tolerance of D.

For example, when t is 1.1 mm, X is 0.6 mm, S is 4.6 mm, D is 45 mm, and P is 0.3 mm, N is 18 (rounded off to the nearest integer).

As shown in Figs. 3 and 4, the inner thread 55 provided on the side wall 52 and the grooves 56 provided inside the respective knurls 54a form a structure with alternating peaks and troughs. During the bump-off process after the injection molding, the grooves 56 expand, so that the cap can be easily bumped off, as will be described later.

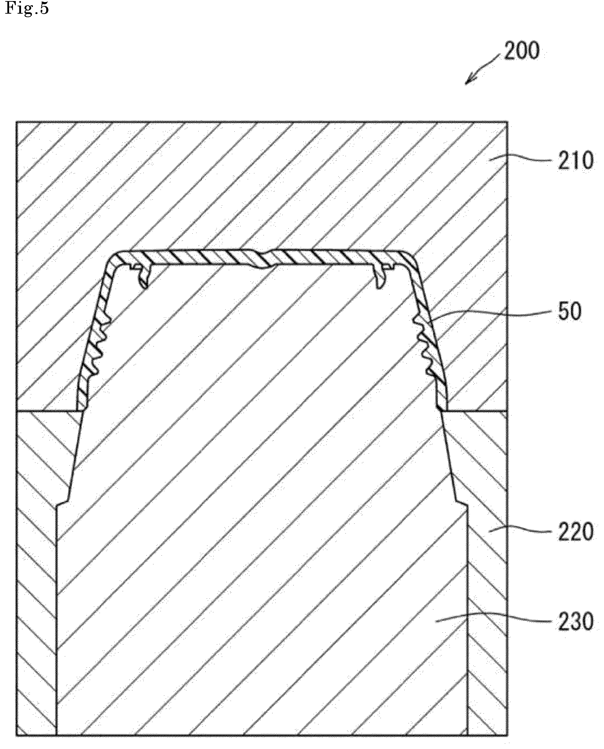

Fig. 5 is a cross-sectional view showing the injection molding process of the cap 50. A mold for injection molding, the entirety of which is denoted by the reference sign 200, includes molds 210, 220, and 230. Polypropylene (PP) is injected into the assembled molds 210 to 230. PP is injected at 190°C, for example.

The PP becomes cooled and solidifies, to form the cap 50. The mold 210 on top of the cap 50 is then removed. The mold 230 is then moved upwards with respect to the mold 220. As a result, the lower end 53 of the cap 50 is pushed up, and the cap 50 is bumped off and removed from the mold 230.

In this bump-off process, the lower end 53 of the cap 50 does not expand because the lower end 53 has a ring-like shape. By contrast, the side wall 52 having the knurls 54a has a structure with alternating peaks and troughs. Therefore, when the lower end 53 of the cap 50 is pushed up, the side wall 52, that is, the grooves 56 (troughs) in particular, expand, to increase the diameter of the cap 50. As a result, a gap is formed between the mold 230 and the side wall 52 of the cap 50, particularly, between the mold 230 and the inner thread 55, so that the cap 50 is bumped off from the mold 230 without rotating.

Because the lower ends of the respective knurls 54a are provided in a manner spaced apart from the lower end 53 of the side wall 52, the lower end 53 having a ring-like shape hardly deforms at the time of this bump-off. For this reason, the grooves 56 in the respective knurls 54a having once expanded during the bump-off are restored to the original shape easily.

As described above, the cap 50 according to the embodiment of the present invention has the structure in which the grooves 56 are provided inside the respective knurls 54a, so that the cap 50 can be removed from the mold 230 by a bump-off process, without causing burrs or discoloration of the inner thread 55 of the cap 50.

As a result, compared with a process in which the cap 50 is removed from the mold by rotating, it is possible to simplify the manufacturing process, to render a rotation motor or the like unnecessary, and also to simplify the manufacturing apparatus.

Furthermore, by using the tapered thread, it is possible to reduce the number of times the cap is rotated to open the cap 50, compared with that required with a straight thread, so that it is possible to make the receptacle easily openable.

INDUSTRIAL APPLICABILITY

The cap according to the invention may be used in plastic containers, in particular, containers for chemicals.

REFERENCE SIGNS LIST

| 10 | Receptacle |
| 11 | Body |
| 12 | Opening |
| 13 | Outer thread |
| 14 | Tapered portion |
| 50 | Cap |
| 51 | Top plate |
| 52 | Side wall |
| 53 | Lower end |
| 54a, 54b | Knurl |
| 55 | Inner thread |
| 56 | Groove |
| 57 | Seal ring |
| 58 | Contact ring |
| 100 | Container |
| 200, 210, 220, 230 | Mold |

Claims

1. A cap comprising: a top plate that is circular in shape; and a side wall becoming larger in a tapered shape from an outer perimeter of the top plate toward a lower end having a ring-like shape, wherein

   on an outer surface of the side wall, a plurality of knurls extending in a direction from the outer perimeter toward the lower end are arranged side by side, and
   on an inner surface of the side wall, grooves formed inside the respective knurls and an inner thread having a screw shape are provided, and the inner thread is split by the grooves.

2. The cap according to claim 1, wherein each of the knurls has a ridgeline substantially in parallel with a vertical direction with respect to the top plate, and bottom surfaces of the respective grooves are provided in parallel with the ridgeline.

3. The cap according to claim 1, wherein lower ends of the respective knurls are spaced apart from the lower end of the side wall.

4. The cap according to claim 1, wherein number N of the knurls is defined by Equation 1 below:

$$N=\pi D/(X+2t+S+P) \cdots \text{(Equation 1)},$$

   where

   t: a cap thickness,
   X: a groove width,
   S: a length of the inner thread between each pair of the grooves,
   D: an inner diameter of a lower end of the cap, and
   P: a dimensional tolerance of D.

5. The cap according to claim 1, wherein the inner thread is one of a double thread, a triple thread, and a quadruple thread.

**EP 4 534 434 A1**

6. The cap according to claim 1, wherein the inner thread is a fine thread.

7. A container comprising: the cap according to any one of claims 1 to 6; and a receptacle mating with the cap.

Fig.1

Fig.2

Fig.3

Fig.4

Fig.5

200

210

50

220

230

## INTERNATIONAL SEARCH REPORT

| International application No. |
|---|
| **PCT/JP2023/019513** |

### A.    CLASSIFICATION OF SUBJECT MATTER

**B65D 41/04**(2006.01)i
FI:    B65D41/04 100

According to International Patent Classification (IPC) or to both national classification and IPC

### B.    FIELDS SEARCHED

Minimum documentation searched (classification system followed by classification symbols)

B65D41/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X | JP 2003-528010 A (PECHINEY PLASTIC PACKAGING, INCORPORATED) 24 September 2003 (2003-09-24) paragraphs [0017]-[0027], [0033]-[0050], fig. 1-9, 10-11 | 1-2, 4-7 |
| A | | 3 |
| A | EP 3150509 A1 (UNITED CAPS FRANCE) 05 April 2017 (2017-04-05) | 1-7 |
| A | JP 2013-169978 A (ASKA COMPANY) 02 September 2013 (2013-09-02) | 1-7 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 June 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/019513**

| Patent document cited in search report | | | Publication date (day/month/year) | Patent family member(s) | Publication date (day/month/year) |
|---|---|---|---|---|---|
| JP | 2003-528010 | A | 24 September 2003 | WO 2001/070586 A1 page 7, line 27 to page 10, line 15, page 12, line 1 to page 19, line 11, fig. 1-9, 10-11 CN 1450970 A KR 10-2002-0089396 A | |
| EP | 3150509 | A1 | 05 April 2017 | FR 3041941 A1 | |
| JP | 2013-169978 | A | 02 September 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004352261 A